## Europäisches Patentamt
## European Patent Office
## Office européen des brevets

(19)

(11) Numéro de publication: **0 011 024**
**B1**

(12) **FASCICULE DE BREVET EUROPEEN**

(45) Date de publication du fascicule du brevet: **17.11.82**

(51) Int. Cl.³: **G 02 B 27/00**

(21) Numéro de dépôt: **79400787.2**

(22) Date de dépôt: **23.10.79**

(54) **Système de visualisation monté sur un casque.**

(30) Priorité: **07.11.78 FR 7831439**

(73) Titulaire: **THOMSON-CSF**
**173, Boulevard Haussmann**
**F-75379 Paris Cedex 08 (FR)**

(43) Date de publication de la demande:
**14.05.80 Bulletin 80/10**

(72) Inventeur: **Gauthier, François Hugues**
**"THOMSON-CSF" - SCPI 173, bld Haussmann**
**F-75360 Paris Cedex 08 (FR)**
Inventeur: **Lepeytre, Jean-Paul**
**"THOMSON-CSF" - SCPI 173, bld Haussmann**
**F-75360 Paris Cedex 08 (FR)**

(45) Mention de la délivrance du brevet:
**17.11.82 Bulletin 82/46**

(84) Etats contractants désignés:
**DE GB IT SE**

(74) Mandataire: **Trocellier, Roger et al,**
**THOMSON-CSF SCPI 173, Bld Haussmann**
**F-75379 Paris Cedex 08 (FR)**

(56) Documents cités:
**FR - A - 2 280 094**
**GB - A - 1 264 343**
**GB - A - 1 289 875**
**GB - A - 1 321 303**
**US - A - 3 833 300**
**US - A - 4 082 432**

Courier Press, Leamington Spa, England.

## Système de visualisation monté sur un casque

La présente invention concerne un système de visualisation monté sur un casque, permettant l'observation à l'infini sous un angle de champ important, de l'image d'un objet lumineux réel, cette image pouvant-être vue en superposition sur la scène extérieure.

La dimension apparente d'un objet dépend de sa distance par rapport à l'oeil. Des champs de vision importants peuvent en conséquence être produits en utilisant des optiques de faibles dimensions localisées à proximité de l'oeil. En rendant le système solidaire d'un casque porté par l'observateur, l'information visuelle reste fournie indépendemment des mouvements de la tête.

Ces considérations ont conduit à l'évolution des systèmes collimateurs pour casque. Leur conception et leur complexité sont fonction de l'application prévue et dépendent notamment du champ utile nécessité pour l'observation de l'image projetée.

Ainsi, en arionique, dans le domaine d'application au pointage d'arme et à la désignation d'objectif, le champ utile peut-être réduit, de 6 à 10°, étant donné que l'objet à projeter peut consister en un unique réticule. Ces systèmes, appelés viseurs en accord avec la fonction assumée, sont réalisables simplement en produisant une réflexion sur une surface courbe de la visière du casque rendue semi transparente. Une surface sphérique convient pour de faibles valeurs de champ. La forme paraboloïde est utilisée pour des champs allant jusqu'à 20° environ et autorise la visualisation d'un plus grand nombre de données.

Un autre domaine d'application concerne la visualisation d'une imagerie complexe telle qu'une image vidéo synthétique d'un collimateur de pilotage ou, toute autre image vidéo, une image de télévision par exemple. La source la mieux adaptée pour former l'objet à projeter est le tube cathodique et le champ utile doit-être au moins de 30 à 35°. Les solutions optiques connues à dioptres répondent le mieux à ce problème, par exemple, celle décrite dans le brevet anglais 1.264.343; la combinaison optique peut comporter: des éléments déviateurs optiques à prismes ou miroirs, des groupements de lentilles pour effectuer un transport d'image et la projection à l'infini de l'image intermédiaire, et un miroir plan semi-transparent pour combiner la vision de la projection avec celle du monde extérieur. La complexité des groupements dioptriques croît très rapidement avec le champ de sorte que les réalisations performantes ne dépassent guère 40° de champ utile pour conserver à l'image projetée des caractéristiques de qualités suffisantes et ne ne pas accroître inconsidérément le coût de l'appareil. On entend par qualité de l'image la valeur angulaire du faisceau lumineux issu d'un point source et pénétrant dans l'oeil de l'observateur. Pour un champ circulaire de 40° la qualité de l'image n'est guère meilleure que 1 mrd au centre du champ et 4 mrd au bord du champ.

Le système de visualisation sur casque proposé est prévu pour le dernier domaine d'application précité ce qui n'exclut d'ailleurs pas la fonction viseur; il permet, selon une réalisation relativement simplifiée comparativement aux solutions dioptriques, d'obtenir des caractéristiques de champ important tout en préservant une qualité élévée de l'image, et une bonne intégration sur un casque opérationnel.

Dans ce but, il utilise un montage à miroir sphérique exploité sur l'axe, cette technique ayant déjà été transposée dans le domain des collimateurs de pilotage pour constituer des dispositifs de visualisation tête haute (head-Up-Display en anglo-saxon). On pourra se reporter notamment à la demande de brevet français publiée sous le no. 2.280.094 qui décrit un dispositif de visualisation tête haute qui utilise un miroir concave sphérique comme optique collimatrice chargée de projeter à l'infini une image de l'objet à visualiser placé en sa surface focale. Un miroir plan semi-transparent est interposé entre le miroir sphérique et sa surface focale, l'oeil de l'observateur étant situé sensiblement au point image du centre de courbure du miroir sphérique vu à travers le miroir plan semi-transparent. Le dispositif de visualisation peut-être aménagé avec une lentille de correction pour former une image sensiblement sphérique d'un objet lumineux de forme plate et pour faire coïncider cette image avec la surface focale du collimateur.

Le brevet américain US 4.082.432 décrit un collimateur tête haute ayant une structure similaire, se composant d'un miroir sphérique au niveau de la surface focale duquel se trouve disposée l'image lumineuse à collimater, et d'un miroir plan semi-transparent pour combiner cette image avec la vision du monde extérieur, avec une réalisation monobloc de cet ensemble. Les faces non utilises du point de vue optique peuvent être traitées pour les rendre non transmissibles de lumière, en sorte de limiter la transmission lumineuse à la zone utile pour l'observateur. On peut se rendre compte qu'une telle réalisation en visualisation tête haute conduit à un appareillage lourd, encombrant et fragile.

Par ailleurs, le système de visualisation décrit dans le brevet américain US 3.833.300 utilise une transmission par fibre optique pour effectuer un transport d'image entre un tube cathodique miniature et la surface focale de la visière du casque utilisée comme optique réflectrice de cette image vers l'observateur, cette visière étant utilisée par transparence pour observer le monde extérieur.

Un objet de la présente invention est de réaliser un système de visualisation monté sur casque, utilisant les techniques précitées en les combinant et comportant: un générateur d'objet lumineux a visualiser, un dispositif de transport d'image pour former une image intermédiaire de l'objet sur une surface focale d'une optique collimatrice, et un miroir plan semi-transparent qui forme avec l'optique collimatrice un ensemble collimateur premettant la vision simultanée du paysage extérieur et de l'image de l'objet projetée à l'infini pour un observateur équipé dudit casque, la dite vision du paysage extérieur étant obtenue par la transmission lumineuse à travers ledit miroir plan semi-transparent du rayonnement correspondant vers l'observateur, ladite vision de l'image de l'objet étant produite par réflexion sur le miroir plan semi-transparent du rayonnement correspondant vers l'observateur, le miroir plan semi-transparent étant incliné sur l'axe de l'optique collimatrice, la direction de visée de l'observateur correspondant à celle dudit axe optique réfléchie par le miroir semi-transparent, ce dernier étant incliné sur l'axe optique et produit par un assemblage de deux prismes accolés; le dispositif de transport d'image, la surface focale et un premier prisme étant situés d'un même côté du miroir plan, le système étant caractérisé en ce que l'optique collimatrice est située de l'autre côté du miroir plan et réalisée sous forme d'un miroir sphérique sur une face du deuxième prisme en sorte de constituer un ensemble collimateur monobloc, et que le dispositif de transport d'image produit l'image intermédiaire sphérique pour épouser la dite surface focale et utilise à cet effet un conducteur à fibres optiques couplé optiquement par une première extrémité avec ledit générateur d'objet lumineux, l'ensemble collimateur monobloc étant usiné à l'emplacement de la surface focale du miroir sphérique selon une cavité destinée à recevoir la deuxième extrémité du conducteur à fibres optiques usinée de manière complémentaire.

Les particularités et avantages de l'invention apparaîtront dans la description qui suit, donnée à titre d'exemple, à l'aide des figures annexées qui représentent:

—la figure 1, un schéma de rappel des propriétés d'un miroir sphérique utilisé sur l'axe;

—la figure 2, un schéma d'ensemble de principe d'un système de visualisation;

—la figure 3, la partie optique collimateur utilisant des prismes accolés;

—les figures 4 à 7 des schémas d'implantation sur casque d'un système de visualisation selon l'invention;

—les figures 8 à 10, des schémas de réalisation du système selon les figures 2 et 3 et utilisant une liaison par fibres optiques pour le transport d'image.

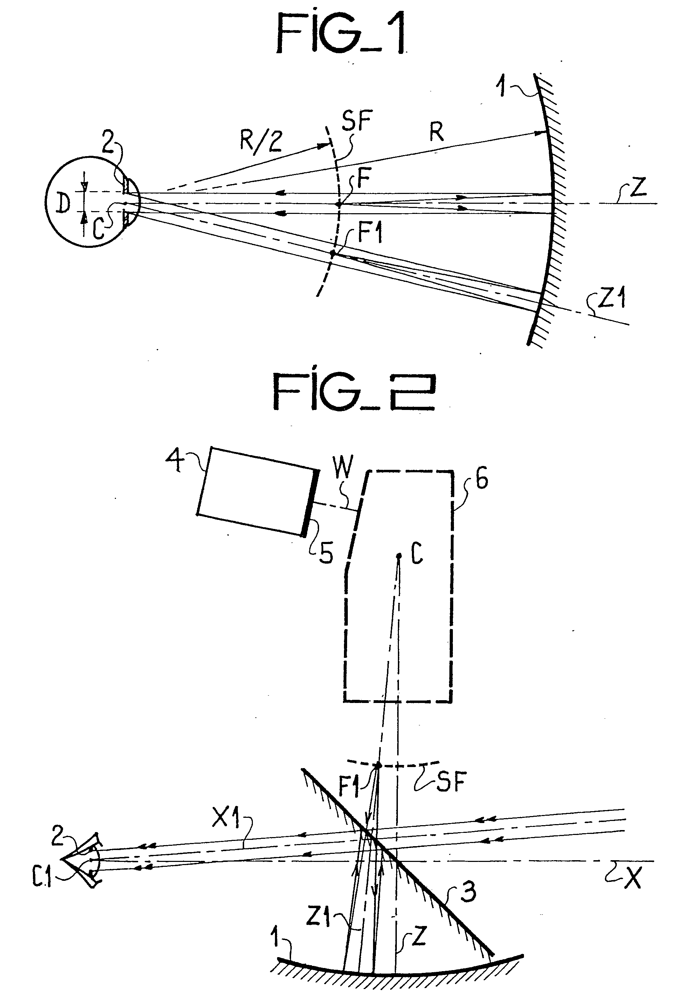

La figure 1 rapelle les propriétés du miroir sphérique 1 utilisé sur l'axe, c'est-à-dire avec une pupille formant diaphragme située au centre de courbure C, de préférence dans un plan perpendiculaire à l'axe Z sur lequel est centré le miroir. Par opposition, l'utilisation est dite hors de l'axe lorsque la pupille est placée à distance du centre de courbure. Le miroir sphérique n'est pas rigoureusement stigmatique pour un foyer F, FI, ... et le point à l'infini sur l'axe Z, Z1 ... correspondant, il présente de l'aberration sphérique; tout rayon peut être considéré comme axe principal si la pupille reste à la même position relative par rapport à ce rayon c'est-à-dire lorsqu'elle est positionnée au centre de courbure. Dans ce cas, quel que soit l'angle du champ, le faisceau passant par une pupille de faible dimension telle une pupille circulaire de diamètre D, n'est entaché que d'abberation sphérique si l'on excepte la courbure de champ. Cette dernière est d'ailleurs bien connue puisque la surface focale SF se trouve sur une sphère de rayon R/2 moitié de celui R du miroir, et centrée en C.

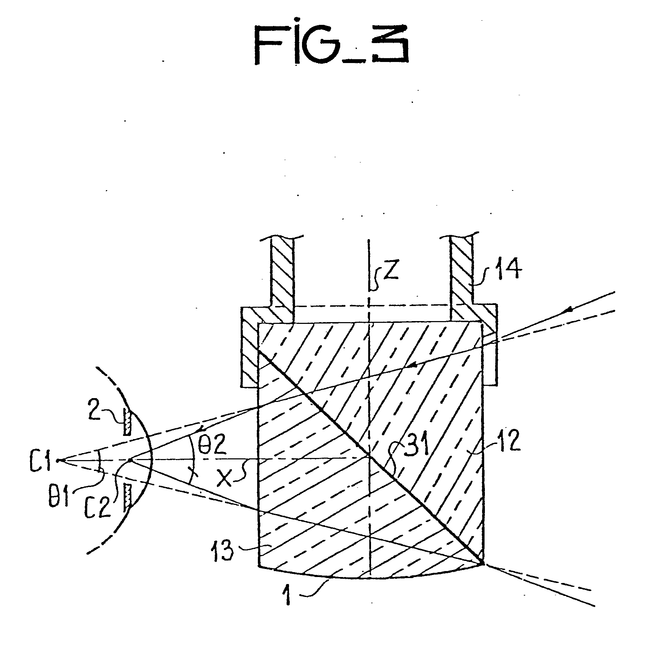

Dans tout système optique destiné à l'observation visuelle, c'est la pupille de l'oeil qui constitue la pupille effective du système complet c'est-à-dire englobant l'oeil. Ainsi dans le cas d'utilisation du miroir sphérique selon la figure 1, l'oeil doit donc être placé au centre de courbure C. Comme la lumière reçue par la pupille est renvoyée par le miroir sensiblement selon la même direction que celle d'incidence, un séparateur optique tel un miroir plan partiellement réfléchissant et partiellement transparent est utilisé pour séparer le trajet optique du rayonnement incident de celui du rayonnement réfléchi. En outre, le miroir semi-transparent autorise la vision simultanée du paysage extérieur par l'observateur. Cette configuration est représentée sur la figure 2 relative à un schéma d'ensemble du système.

Le miroir semi-transparent 3 est positionné en sorte que le rayonnement parvient à l'oeil 2 après traversée du miroir plan 3, réflexion sur le miroir sphérique 1 et réflexion sur le miroir plan 3 en direction de l'oeil, lequel est positionné au point C1 image du centre de courbure C à travers le miroir 3. Le rayonnement est représenté pour un point objet F1 sur la surface focale SF. Après traversée du miroir plan 3 l'image de ce point est renvoyée à l'infini par le miroir sphérique 1 sous forme de rayons parallèles qui sont réfléchis vers l'oeil 2 selon la direction X1 par le miroir plan 3; le rayonnement provenant du paysage extérieur selon cette cette direction X1 jusqu'à la pupille de l'oeil est indiquée par des doubles flèches et traverse le miroir 3 encore appelé glace mélangeuse. Selon une configuration préférentielle la glace est inclinée à 45° sur l'axe principal Z du miroir sphérique 1 et l'axe X perpendiculaire à l'axe Z et passant par le point image C1, représente l'axe normal de visée de l'observateur.

**0 0 11 024**

Les autres éléments de la combinaison comportent des moyens 4 générateur de l'objet lumineux 5, celui-ci étant de préférence formé sur l'écran d'un tube cathodique miniature, et des moyens optiques 6 permettant de produire une image intermédiaire de l'objet 5 sur la surface focale SF. Le dispositif optique 6 est rendu nécessaire du fait que l'objet 5 ne peut, dans le concept d'un viseur de casque, se trouver directement positionné sur la surface SF, ni en épouser la courbure et que l'axe optique W en sortie du générateur 4 n'est généralement pas orienté selon la direction Z. En conséquence, le dispositif optique 6 comporte des moyens déviateurs optiques pour produire le transport d'image en SF.

Le groupement miroir sphérique 1 et miroir plan semi-transparent 3 est désigné dans ce qui suit par ensemble collimateur. Le système étant porté par un casque, l'oeil de l'observateur est situé à une faible distance de l'ensemble collimateur, à quelques centimètres. Il en résulte des difficultés à réaliser le miroir plan 3 sous forme d'une lame à faces parallèles à cause de l'astigmatisme produit du fait que la lame n'est pas orthogonale à la direction principale Z et qu'elle présente une certaine épaisseur. Le défaut d'astigmatisme croît rapidement avec l'épaisseur de la lame et l'angle d'incidence des rayons provenant de l'image intermédiaire et qui sont ensuite réfractés dans la lame pour la traversée vers le miroir sphérique 1. Une telle solution exige donc la recherche d'un compromis en réalisant une lame très mince se rapprochant le plus possible du concept théorique d'une lame d'épaisseur quasiment nulle afin de réduire l'astigmatisme à un seuil tolérable pour l'observation.

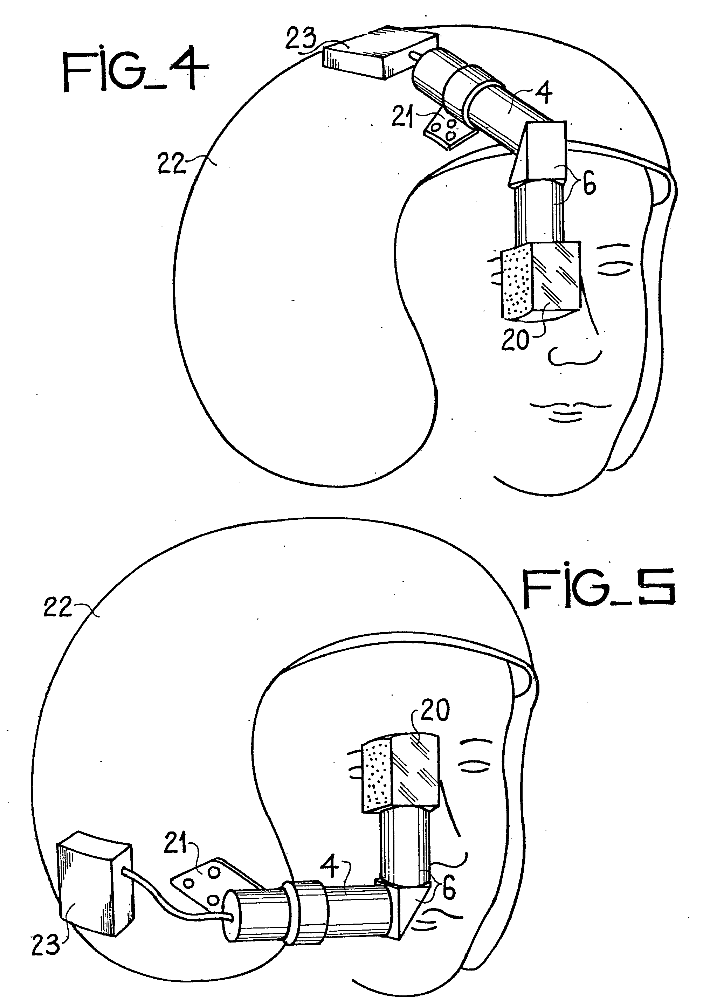

La figure 3 représente l'ensemble collimateur utilisant deux prismes accolés 12 et 13. La surface plane de collage 31 des deux prismes est aménagée pour constituer un miroir plan semi-transparent équivalent à une lame sans épaisseur. La face inférieure du prisme 13 est sphérique et rendue réfléchissante pour former le miroir sphérique 1. L'ensemble de prismes est réalisé en matériau optique transparent, verre ou plastique, et est supporté par une structure 14 de liaison avec la partie transport d'image. L'oeil 2 est placé à l'image du centre de courbure du miroir 1 à travers le miroir plan 31 et en tenant compte du trajet optique dans des milieux d'indice différents, l'air et le matériau transparent utilisé pour les prismes. En conséquence le point image C1 se trouve décalé en C2 et rapproché de l'ensemble collimateur d'où il résulte un accroissement de la valeur angulaire de champ indiqué respectivement par $\theta 1$ et $\theta 2$ sur les figures 3 et 4. Cet accroissement est d'autant plus élevé que l'indice du matériau des prismes est important. Par contre l'accroissement de l'indice de réfraction joue au détriment de plusieurs paramètres:

—la distance oeil—collimateur diminue et le confort d'observation et la sécurité sont diminués;—le matériau peut être du plastique pour un indice voisin de 1,5 et au-delà en verre d'où une fabrication en série moins aisée et un accroissement du poids;—le diamètre du cercle oculaire défini par la dimension de la zone dans laquelle la pupille de l'oeil de l'observateur peut se déplacer tout en voyant le champ total diminue ainsi que le confort d'observation;—la qualité de l'image reste sensiblement préservée. La réalisation avec un plastique optique permet d'obtenir aisément un champ rectangulaire de 30 à 35° en site et 40 à 45° en gisement, avec des verres d'indice supérieur le champ en site peut atteindre 45° auquel on fait correspondre un champ en gisement de l'ordre de 55°.

Les moyens générateurs de l'objet à visualiser, ou source d'imagerie, peuvent être de différents types:

—réticules éclairés, cristaux liquides, matrice de diodes électroluminescentes ou tube cathodique. Ce dernier permet la plus grande variéte d'affichage avec plusieures niveaux de lumière et est considéré comme source dans de qui suit. L'objet lumineux 5 présente la dimension de l'écran du tube 4 (figure 2) et le montage sur le casque exige un transport d'image entre le tube et le bloc collimateur. Le dispositif optique de transport et de déviation 6 utilise une formule à fibres optiques qui tient compte de la correction de courbure de champ du miroir sphérique.

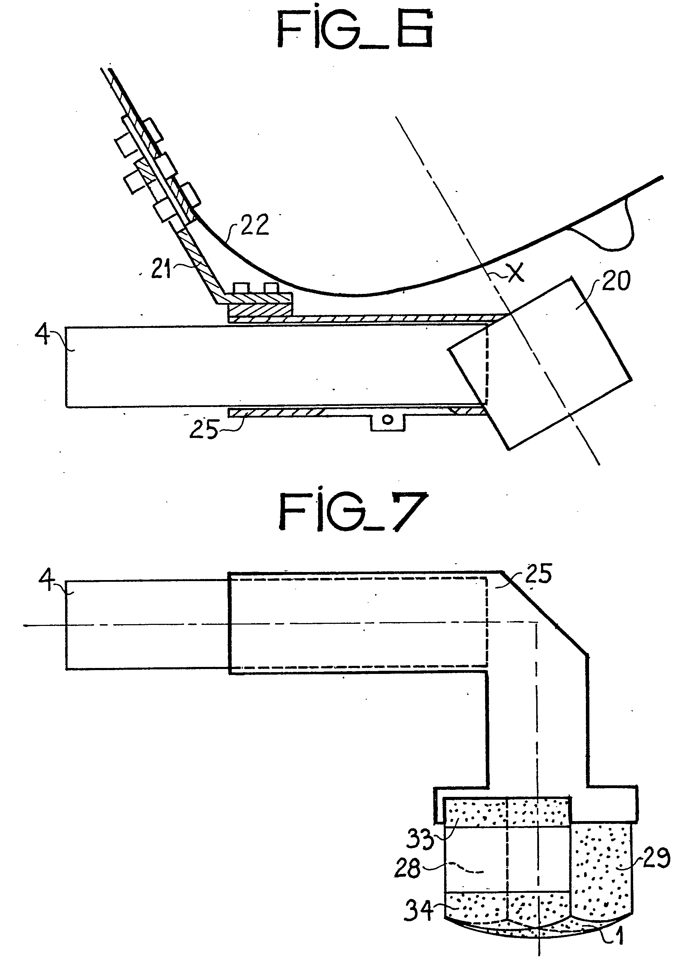

Les figures 4 et 7 ont trait à l'implantation du système de visualisation sur un casque. Cette implantation peut se faire en haut du casque comme présenté sur la figure 4 ou selon la disposition latérale de la figure 5. Les principaux éléments désignés sur ces figures sont le tube cathodique 4, le collimateur à prismes 20, le dispositif de transport d'image 6, un dispositif de fixation 21 au casque 22 et une alimentation très haute tension 23 pour le tube cathodique miniature. Les figures 6 et 7 montrent plus en détail un exemple de réalisation selon la figure 5; sur la figure 6 apparaissent des fixations 21 du système au casque selon un agencement réglable parallélement à la direction de visée X pour régler la position du bloc collimateur 20 par rapport à l'oeil. Le tube 4 et le dispositif de transport d'image 6 sont maintenus dans une structure tubulaire et coudée 25 qui se termine en forme d'étrier vers l'extrémité destinée à supporter le bloc collimateur 20, cette structure est solidaire des fixations 21 au casque. Les faces latérales 28 et 29 du bloc 20 ne sont pas utiles pour la transmission optique et sont de préférence dépolies et noircies de manière à éliminer les réflexions parasites des rayons provenant de l'extérieur, dans le même but la face en vis à vis de l'oeil peut être traitée de la même façon dans des zones 33—34 extérieures au champ. La face spherique 1 est traitée réfléchissante; les faces utiles du bloc 20 sont traitées antireflet dans la bande spectrale prévue pour l'exploitation.

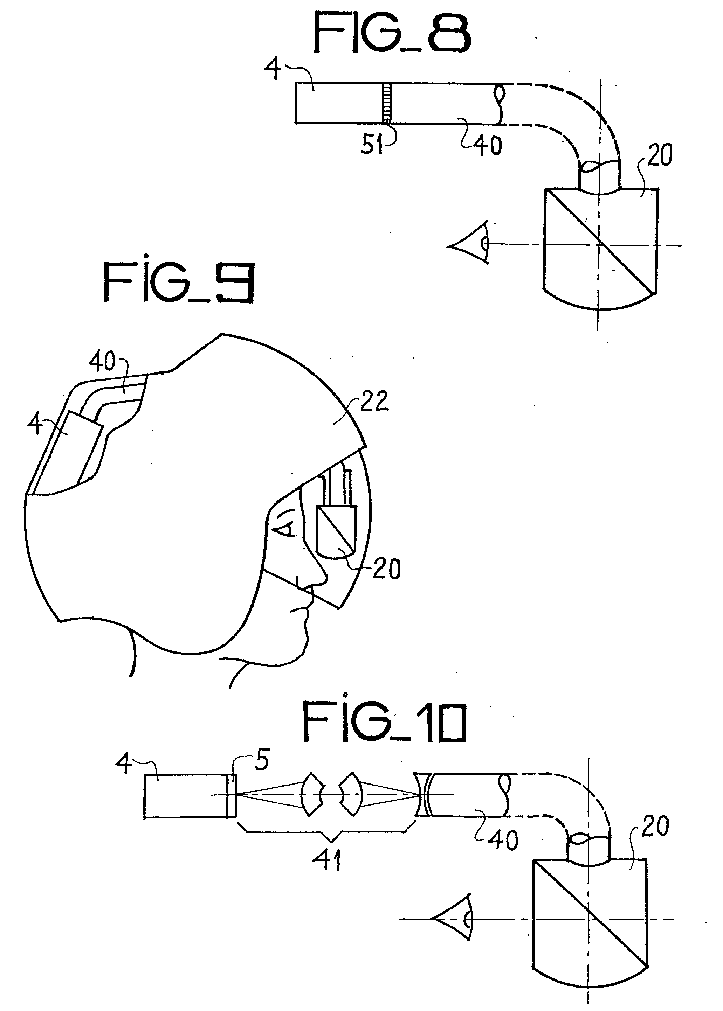

La figure 8 représente un mode de réalisation du transport d'image par un faisceau de fibres optiques 40, la source étant un tube cathodique 4 dont la face avant est constituée par une galette 51 de fibres optiques. La liaison avec le faisceau 40 peut s'effectuer par collage avec une colle transparente. L'autre extrémité du faisceau 40 est usinée et polie pour former une surface sphérique de rayon R/2 et être collée dans une cavité correspondante prévue sur la face supérieure du bloc collimateur 20.

La figure 9 représente une implantation correspondante sur un casque 22 porté par un pilote. Cette solution est légère et peu encombrante et s'intègre bien sur un casque, mais le champ en site est limité car l'image intermédiaire est matérielle et visible par l'observateur, et le système présente des défauts de chromatisme.

La figure 10 représente un autre mode de réalisation du transport d'image par un faisceau de fibres optiques, la source étant cette fois un tube cathodique conventionnel dont la face avant 5 est un plan en verre. On utilise dans cette version un objectif optique 41 pour venir former l'image de l'objet 5 sur la face avant du conducteur 40 à fibres optiques.

Afin d'éviter des difficultés d'usinage à l'extrémité du faisceau couplée au collimateur, on peut opter pour une solution hybride et interposer un objectif dioptrique, dans ce cas l'image n'est plus matérielle dans la zone focale, le champ peut être plus important et le chromatisme corrigé.

Comme on peut se rendre compte, de multiples variantes d'exécution sont possibles dont des exemples sont présentés sur les figures 4 à 10.

Le monobloc de l'ensemble collimateur selon la figure 3 peut être produit avec plus de deux éléments; dans le cas des réalisations en verre par exemple, la surface courbe inférieure constituent le miroir sphérique et une surface courbe supérieure éventuelle (cas des figures 8 à 10) peuvent être produites par des éléments rapportés sur des prismes à surfaces planes, tel que par collage d'un ménisque plan-convexe à la partie inférieure pour réaliser le miroir 1.

## Revendications

1—Système de visualisation monté sur un casque, comportant: un générateur (4) d'objet lumineux (5) a visualiser, un dispositif de transport d'image (6) pour former une image intermédiaire de l'objet sur une surface focale d'une optique collimatrice (1), et un miroir plan semi-transparent (3; 31) qui forme avec l'optique collimatrice un ensemble collimateur permettant la vision simultanée du paysage extérieur et de l'image de l'objet projetée à l'infini pour un observateur équipé dudit casque, ladite vision du paysage extérieur étant obtenue par la transmission lumineuse à travers ledit miroir plan semi-transparent du rayonnement correspondant vers l'observateur, ladite vision de l'image de l'objet étant produite par réflexion sur le miroir plan semi-transparent du rayonnement correspondant vers l'observateur, le miroir plan semi-transparent étant incliné sur l'axe (Z) de l'optique collimatrice, la direction de visée (X) de l'observateur correspondant à celle dudit axe optique réfléchi par le miroir semi-transparent, ce dernier étant incliné sur l'axe optique et produit par un assemblage de deux prismes accolés (12 et 13); le dispositif de transport d'image, la surface focale et en premier prisme (12) étant situés d'un même côté du miroir plan (31), le système étant caractérisé en ce que l'optique collimatrice est située de l'autre côté du miroir plan (31) et réalisée sous forme d'un miroir sphérique (1) sur une face du deuxième prisme (13) en sorte de constituer un ensemble collimateur monobloc (20), et que le dispositif de transport d'image produit l'image intermédiaire sphérique pour épouser ladite surface focale et utilise à cet effet un conducteur à fibres optiques (40) couplé optiquement par une première extrémité avec ledit générateur d'objet lumineux l'ensemble collimateur monobloc étant usiné à l'emplacement de la surface focale du miroir sphérique selon une cavité destinée á recevoir la deuxième extrémité du conducteur à fibres optiques usinée de manière complémentaire.

2—Système selon la revendication 1, caractérisé en ce que les faces latérales (28—29) dudit bloc non utilisées pour la transmission optique vers l'observateur sont dépolies et opacifiées pour l'élimination des rayonnements parasites, et celle positionnée côté observateur, est également dépolie, et opacifiée dans des zones (33—34) extérieures au champ d'observation, et qu'il est prévu des moyens de réglage (21) de positionnement du système optique par rapport au casque (22) pour déplacer le point image (C1) du centre de courbure (C) du miroir sphérique vu à travers le miroir plan selon la direction de visée (X), et déplacer ainsi ce point image par rapport à l'oeil de l'observateur équipé dudit casque.

3—Système selon la revendication 1 ou 2, caractérisé en çe que le générateur d'objet lumineux est un tube cathodique dont la face avent comporte une galette de fibres optiques (51) à laquelle est couplée la première extrémité du conducteur optique (40).

4—Système selon la revendication 1 ou 2, caractérisé en ce que le générateur d'objet lumineux est un tube cathodique dont la face avant est couplée à la première extrémité du conducteur optique (40) par l'intermédiaire d'un objectif dioptrique (41).

## Patentansprüche

1. An einem Helm angebrachtes Sehsystem mit: einem Generator (4) zum erzeugen eines sichtbar zu machenden Lichtobjekts (5) mit einem Bildfördergerät (6) zur Erzeugung eines Zwischenbildes des Objekts auf einer Fokalfläche eines optischen Kollimationssystems (1), sowie mit einem ebenen halbdurchsichtigen Spiegel (3, 31), welcher in Verbindung mit dem optischen Kollimationssystem eine geschlossene Kollimationseinheit bildet, die die gleichzeitige visuelle Wahrnehmung der äusseren Umgebung und des ins Unendliche projizierten Bildes des Objekts durch einen den Helm tragenden Beobachter gestattet, wobei die Wahrnehmung der äusseren Umgebung durch die optische Übertragung der entsprechenden Strahlen an den Beobachter durch den genannten ebenen halbdurchsichtigen Spiegel hindurch, und die Wahrnehmung des Objektbildes durch Reflektierung der entsprechenden Strahlen zum Beobachter hin vermittels des ebenen halbdurchsichtigen Spiegels gesichert wird, und wobei der eben halbdurchsichtige Spiegel zur Achse (Z) des optischen Kollimationssystems geneigt ist und die Sichtrichtung (X) des Beobachters mit der Richtung der genannten, vom halbdurchsichtigen Spiegel reflektierten optischen Achse entspricht, während dieser Spiegel zur optischen Achse geneigt ist und aus zwei miteinander direkt verbundenen Prismen (12 und 13) besteht; wobei ferner das Bildfördergerät, die Fokalfläche und ein erstes Prisma (12) auf einer Seite des ebenen Spiegels (31) angeordnet sind, dadurch gekennzeichnet, dass das optische Kollimationssystem auf des anderen Seite des ebenen Spiegels (31) angeordnet ist und aus einem sphärischen Spiegel (1) auf einer Fläche des zweiten Prismas (13) besteht, derart, dass eine zusammenhängende Kollimationseinheit (20) gebildet wird, und ferner gekennzeichnet dadurch, dass das Bildfördergerät das sphärische Zwischenbild unter Anpassung an die genannte Fokalfläche erzeugt, und hierfür einen mit einem ersten seiner beiden Enden optisch an den Lichtobjektgenerator angeschlossenen Lichtleiter (40) versendet, wobei die Kollimationseinheit an der Stelle der Fokalfläche des sphärischen Spiegels nach Massgabe einer Ausnehmung geformt ist, welche das zweite Ende des Lichtleiters aufnehmen kann und komplementar geformt ist.

2. System nach Anspruch 1, dadurch gekennzeichnet, dass die Seitenflächen der genannten Einheit, die nicht zur optischen Übertragung an den Beobachter dienen, mattiert und undurchsichtig sind, um Störstrahlen abzuweisen, während die dem Beobachter zugewandte Fläche ebenfalls mattiert ist und in den ausserhalb des Beobachtungsfeldes liegenden Zonen (33—34) undurchsichtig sind, und dass Einstellmittel (21) zum Einstellen der Lage des optischen Systems in bezug auf den Helm (22) vorgesehen sind, um den dem Krümmungmittel-punkt (C) des sphärischen Spiegels entsprechenden, in der Sichtrichtung (X) beobachteten Bildpunkt (C1) zu bewegen und somit diesen Punkt in bezug auf das Auge des den Helm tragenden Beobachters zu versetzen.

3. System nach Anspruch 1 oder 2, dadurch gekennzeichnet, das der Lichtobjektgenerator einen Kathodenröhre ist, deren Stirnfläche eine Lichtleiteranschlussplatte (51) aufweist, an welche das erste Ende des Lichtleiters (40) angeschlossen ist.

4. System nach Anspruch 1 oder 2, dadurch gekennzeichnet, dass der Lichtobjektgenerator eine Kathodenröhre ist, deren Stirnfläche über ein dioptrisches Objectiv (41) angeschlossen ist.

**Claims**

1. Visualization system mounted on a helmet, comprising: a generator (4) generating a luminous object (5) to be visualized, an image transfer device (6) for forming an intermediary image of the object on a focal surface of an optical collimating system (1), and a planar semi-transparent mirror (3, 31) which constitutes with the optical collimating system a collimating assembly allowing for simultaneous vision of the exterior landscape and the image of the object projected to infinity, by an observer equipped with said helmet, said vision of the exterior landscape being achieved by luminous transmission through said planar semi-transparent mirror of the corresponding radiation to the observer, said vision of the image of the object being achieved by reflection on the semi-transparent planar mirror of the corresponding radiation toward the observer, the planar semi-transparent mirror being inclined with respect to the axis (Z) of the optical collimating system, the sighting direction (X) of the observer corresponding to the direction of said optical axis as reflected by the semi-transparent mirror, the latter being inclined with respect to the optical axis and constituted by an assembly of two juxtaposed prisms (12 and 13); the image transfer device, the focal surface and a first prism (12) being located on one side of the planar mirror (31), said system being characterized in that the optical collimating system is located on the opposite side of the planar mirror (31) and constituted by a spherical mirror (1) on one face of the second prism (13) so as to form a self-contained collimator assembly (20), and in that the image transfer device produces the intermediary spherical image to correspond in shape to said focal surface and uses for this purpose a conductor having optical fibres (40) optically connected at a first end thereof to said luminous object generator, the self-contained collimating assembly being machined at the location of the focal surface of the spherical mirror in conformity with a recess adapted to receive the second end of the optical fibre conductor, which recess is machined in a complementary manner.

2. System according to claim 1, characterized in that the lateral faces (28—29) of that self-contained assembly, which are not used for the optical transmission to the observer, are frosted and rendered opaque for eliminating any parasitic radiations, and the surface facing the observer is also frosted and rendered opaque in zones (33—34) outside of the observation field, and in that adjusting means (21) are provided for adjusting the position of the optical system with respect to the helmet (22) so as to displace the image point (C1) of the centre of curvature (C) of the spherical mirror, as viewed through the planar mirror in the sighting direction (X), and thus displace said point with respect to the eye of the observer equipped with said helmet.

3. System according to claim 1 or 2, characterized in that the luminous object generator is a cathode tube the front face of which comprises an optical fibre contact disc (51) to which the first end of the optical conductor (40) is connected.

4. System according to claim 1 or 2, characterized in that the luminous object generator is a cathode tube the front face of which is connected to the first end of the optical conductor (40) through a dioptric objective (41).

# FIG_1

# FIG_2

1

# FIG_3

FIG_4

FIG_5

# FIG_6

# FIG_7

# FIG_8

4

51    40    20

# FIG_9

40

4

22

20

# FIG_10

4    5

41    40    20